# EUROPEAN PATENT APPLICATION

(11) **EP 2 302 253 A2**
(43) Date of publication of application: **30.03.2011**
(21) Application number: 10382246.6
(22) Date of filing: 13.09.2010
(51) Int. Cl.: F16F 9/53, F16F 13/30

(54) **Contact wall for magnetorheological fluids**

(30) Priority: 29.09.2009 ES 200930759
(71) Applicant: Mondragon Goi Eskola Politeknikoa Jose Maria Arizmendiarrieta, S.COOP., Loramendi 4 20500 Arrasate (Guipuzcoa) (ES)
(72) Inventor: Zubieta Andueza, Mikel, 31760, Etxalar (ES); Elejabarrieta Olabarri, María Jesús, 48200, Durango (ES); Bouali Saidi, Mohammed Mounir, 48230, Elorrio (ES); Berasategui Arostegui Joanes, 20213 Idiazabal (Gipuzkoa) (ES)
(74) Representative: Igartua, Ismael

(57) **Abstract**

Contact wall for magnetorheological fluids, which delimits at least partially conductor means where a magnetorheological fluid (6) is disposed and which comprises a base wall (2, 3), a contact surface (4, 5) that is in contact with the magnetorheological fluid (6), and a plurality of magnetic particles (1) attached to the base wall (2, 3), in contact with the contact surface (4, 5). The magnetic particles (1) are of a ferromagnetic or ferrimagnetic material, and the base wall (2, 3) is formed by a diamagnetic or paramagnetic material.

## Description

### TECHNICAL FIELD

The invention relates to contact walls for magnetorheological fluids, and in particular to contact walls for magnetorheological fluids used in applications in which the sliding of said fluid in relation to said wall is relevant.

### PRIOR ART

Magnetorheological fluids are made up of magnetic particles suspended in a transfer fluid. When a magnetic field is applied perpendicular to the direction of flow of said magnetorheological fluid, the magnetic particles align to form chains perpendicular to the direction of flow. When the flow is laminar, a fluid moves in parallel sheets or laminar layers without intermingling, the magnetic particles of a chain of the magnetorheological flow corresponding in this case with different laminar layers of said magnetorheological fluid, so that the force of attraction between the magnetic particles obstructs the viscous sliding between said laminar layers of the magnetorheological fluid. As a result, with the action of a magnetic field, the chains of magnetic particles cause the fluid to behave like a solid, until a threshold voltage at which the force of attraction of the magnetic particles to each other is exceeded, and the flow between the laminar layers of the magnetorheological fluid begins. The bigger the magnetic field applied, the greater the force between the magnetic particles of a chain and the greater also the threshold voltage at which the viscous sliding between the laminar layers of the magnetorheological fluid begins. As a result, the behaviour of the magnetorheological fluid may be controlled in accordance with the magnetic field applied, which is extremely useful in applications such as shock absorbers, brakes or clutches for example.

The magnetorheological fluid flows through a conductor means. Below the threshold voltage there is no flow of said magnetorheological fluid through said conductor means. Rather, said magnetorheological flow remains static, unless all the fluid, in the manner of a solid block, slides in relation to walls that delimit the conductor means. In the absence of a magnetic field, the viscous adherence between the magnetorheological fluid and the walls is greater than the viscous force present between the laminar layers of the magnetorheological fluid, so that there is no sliding of the magnetorheological fluid in relation to said walls. However, in the presence of a magnetic field there is a magnetic force additional to the viscous force that increases the adherence between the laminar layers of the magnetorheological fluid, which in certain cases exceeds the force of adherence between the magnetorheological fluid and the walls, cases in which the magnetorheological fluid slides in relation to said walls. The sliding of the magnetorheological fluid in relation to the walls means that the flow of the magnetorheological fluid is not controllable, so that for a correct functioning or improvement in the functioning of the application in which a magnetorheological fluid is used, the sliding between the walls and the magnetorheological fluid takes on special relevance in said applications.

### DISCLOSURE OF THE INVENTION

It is an object of the invention to provide a contact wall for magnetorheological fluids that enables an increase in the force necessary to cause a sliding between said wall and said magnetorheological fluid.

The contact wall of the invention is used in applications where a magnetorheological fluid is disposed in a conductor means, the wall delimiting at least part of said conductor means and said wall being in contact with said magnetorheological fluid. The wall comprises a base wall, a contact surface that is in contact with the magnetorheological fluid, and a plurality of magnetic particles attached to the base wall, in contact with the contact surface and in contact, therefore, with the magnetorheological fluid, while the magnetorheological fluid is formed by a plurality of particles.

The magnetic particles are of a ferromagnetic or ferrimagnetic material, and the base wall is formed by a diamagnetic or paramagnetic material. As a result, when a magnetic field is applied perpendicular to the flow of the magnetorheological fluid said magnetic field is attracted by said magnetic particles, said magnetic particles forming, along with the particles of the magnetorheological fluid, chains that are formed in the presence of said magnetic field, the magnetorheological fluid being formed by a plurality of laminar layers. Said chains cause an increase in the force of adherence between the magnetorheological fluid and the contact wall due to the magnetic force being equivalent to the increase in the force of adherence between the laminar layers of the magnetorheological fluid in the magnetic field applied. Thus, as the adhering force between the wall and the magnetorheological flow is greater, the force necessary to cause the sliding between the magnetorheological fluid and the wall increases, thereby preventing said fluid from coming away from said wall in the manner of a block.

These and other advantages and characteristics of the invention will be made evident in the light of the drawings and the detailed description thereof.

### DESCRIPTION OF THE DRAWINGS

Figure 1 shows a preferred embodiment of the contact wall for magnetorheological fluids of the invention, in contact with a magnetorheological fluid and in the presence of a magnetic field.
Figure 2 shows the wall of Figure 1 in contact with a magnetorheological fluid, without any magnetic field being applied.

### DETAILED DISCLOSURE OF THE INVENTION

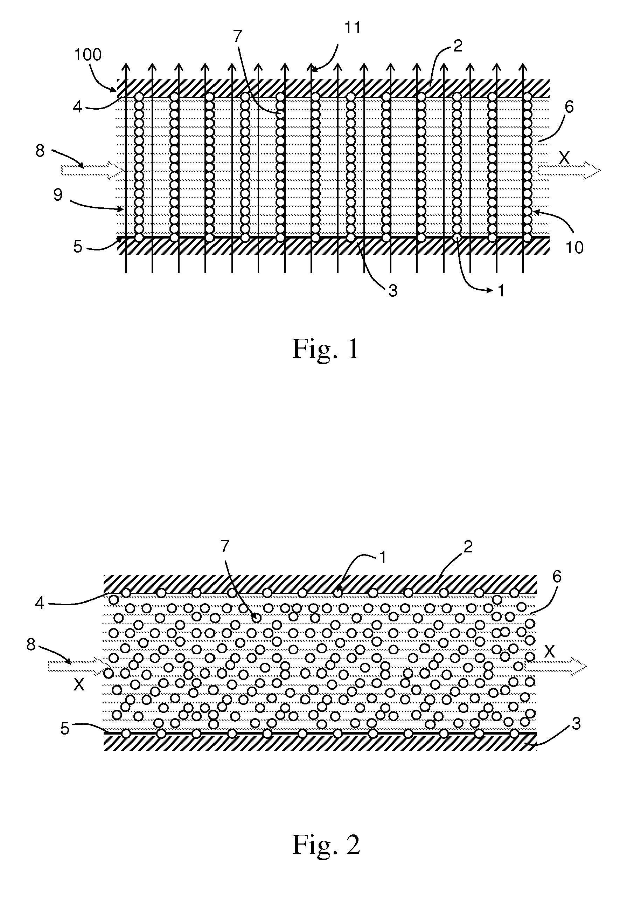

Figures 1 and 2 show a preferred embodiment of the contact wall 100 of the invention. Figure 1 shows a partial view in cross-section of a conductor means through which a magnetorheological fluid 6 can flow in a specific direction X, said means being delimited by walls 100 or by a single wall 100 if said means comprises, for example, a tubular shape. The magnetorheological fluid 6 comprises a plurality of particles 7 that, with said magnetorheological fluid 6 flowing in the specific direction X, align to form chains 10 perpendicular to said specific direction X in the presence of a magnetic field 11 perpendicular to said specific direction X (perpendicular to a flow 8 of said magnetorheological fluid 6), as shown in Figure 1. Figure 2 shows the case in which no magnetic field 11 is applied, a case in which the particles 7 of the magnetorheological fluid 6 are distributed in a random manner.

Each wall 100 comprises a base wall 2, 3 of a diamagnetic or paramagnetic material, a plurality of magnetic particles 1 of a ferromagnetic or ferrimagnetic material, and a contact surface 4, 5 that covers the corresponding base wall 2, 3 and is in contact with the magnetorheological fluid 6 present in the conductor means. In the preferred embodiment, the magnetic particles 1 are partially housed in the base walls 2 and 3 and in contact with the contact surfaces 4 and 5 of each base wall 2, 3, although they can be disposed on said contact surfaces 4 and 5 without being housed in the corresponding base wall 2, 3. Both the magnetic particles 1 and the contact surfaces 4 and 5 are in contact with the magnetorheological fluid 6 that flows through the conductor means, thereby enabling direct contact between the particles 7 of said magnetorheological fluid 6 and the magnetic particles 1.

The size and composition of the magnetic particles 1 is preferably approximately equal to that of the particles 7 of the magnetorheological fluid 6. In addition, the amount and distribution of the magnetic particles 1 in contact with each contact surface 4, 5 is equal to or greater than the number and distribution of the chains 10 of the particles 7 that are formed between the contact surfaces 4 and 5 of the conductor means, when a magnetic field 11 is applied perpendicular to the flow 8 of the magnetorheological fluid 6. As a result, in the presence of a magnetic field 11 perpendicular to the flow 8 of the magnetorheological fluid 6, the magnetic particles 1 in contact with each contact surface 4 and 5 of the corresponding base wall 2, 3 form part, along with the particles 7 of the magnetorheological fluid 6, of the chains 10. As a result, the adherence between the magnetorheological fluid 6 and each contact surface 4 and 5 increases in an equivalent manner to the adherence between laminar layers 9 of the magnetorheological fluid 6, thereby preventing the sliding between the magnetorheological fluid 6 and the contact surfaces 4 and 5.

It is evident that the contact wall 100 for magnetorheological fluids is applicable in multiple applications of magnetorheological fluids 6 such as shock absorbers, brakes, clutches and rheometers. In all these applications the absence of sliding (or the increase of the force necessary for it to occur) between the magnetorheological fluid 6 and the contact surfaces 4 and 5 results in improved control of the flow 8 of said magnetorheological fluid 6, and therefore a more controlled response of the application.

## Claims

1. Contact wall for magnetorheological fluids, which delimits, at least partially, conductor means through which flows a magnetorheological fluid (6), and which comprises
a base wall (2, 3),
a contact surface (4, 5) that is in contact with the magnetorheological fluid (6), and
a plurality of magnetic particles (1) attached to the wall (100),
**characterised in that**
the magnetic particles (1) are of a ferromagnetic or ferrimagnetic material, and the base wall (2, 3) is formed by a diamagnetic or paramagnetic material, the magnetic particles (1) being disposed in contact with the contact surface (4, 5) and with the magnetorheological fluid (6).

2. Wall according to claim 1, wherein the magnetic particles (1) are partially housed in the base wall (2, 3).

3. Wall according to claim 1, wherein the magnetic particles (1) are disposed on the contact surface (4, 5).

4. Wall according to any of claims 1 to 3, wherein the magnetorheological flow (6) comprises a plurality of particles (7), said particles (7) of the magnetorheological fluid (6) and the magnetic particles (1) of the wall (100) comprising approximately the same size and the same composition.

5. Wall according to any of claims 1 to 4, wherein when a magnetic field (11) is applied to the magnetorheological fluid (6), perpendicular to a flow (8) of said magnetorheological fluid (6), chains (10) of the particles (7) perpendicular to the flow (8) are generated, the amount of the magnetic particles (1) in contact with the contact surface (4, 5) being equal to or greater than the amount of chains (10) generated.

6. Wall according to claim 5, wherein when the distribution of the magnetic particles (1) is equal to the distribution of the chains (10).
